# EUROPEAN PATENT APPLICATION

(11) **EP 1 376 570 A2**
(43) Date of publication of application: **02.01.2004**
(21) Application number: 03253593.2
(22) Date of filing: 06.06.2003
(51) Int. Cl.: G11B 17/22

(54) **Media storage system and coupler therefor**

(30) Priority: 11.06.2002 US 167253
(71) Applicant: Hewlett-Packard Company, Palo Alto, CA 94303 (US)
(72) Inventor: Ballard, Curtis C., Eaton, CO 80615 (US)
(74) Representative: Tollett, Ian

(57) **Abstract**

A coupler (10) for a media storage system (12). The coupler may comprise a receiving member (24) having an opening (28) formed in a first storage library (14) and an opening (30) formed in a second storage library (16). The openings of the receiving member align with one another when the first storage library is positioned adjacent the second storage library. The coupler may also comprise an arm member (26) pivotally mounted to the first storage library. The arm member pivots between an open position and a closed position and engages the receiving member when it is pivoted to the closed position, thereby connecting the first storage library to the second storage library.

## Description

The invention generally pertains to a coupler for a media storage system and to a method for connecting a first storage library to a second storage library.

Media storage systems, or autochangers, are commonly used to store data cartridges at known locations and to retrieve the desired data cartridges so that data may be written to and/or read from the data cartridges. Accordingly, large volumes of computer-readable data can be stored on numerous data cartridges and accessed by a single computer or by multiple computers connected to the media storage system over a network.

Such media storage systems may include one or more storage libraries with storage magazines that serve as storage locations for the data cartridges, and a read/write device to read and/or write data on the data cartridges. The media storage system may also include a cartridge-handling system (e.g., a "picker"), as well as a drive system for moving among the data cartridges stored in the storage libraries.

One of the advantages of a media storage system is the ability to readily expand its capacity by adding more storage libraries to the media storage system. Each of the storage libraries may be provided with additional storage magazines for storing data cartridges. In any event, the storage libraries may be arranged adjacent one another so that the cartridge-handling system can be operated to move between each of the storage libraries and access the data cartridges therein.

The storage libraries are commonly configured such that the top and/or bottom panels may be removed and the storage libraries can be stacked on top of each other, although other arrangements are also possible. If the storage libraries were to shift during operation, the cartridge-handling system may be unable to access the data cartridges. Therefore, the storage libraries are typically fastened together. Of course, connecting the storage libraries with screws or similar fasteners is a time-consuming process that requires the use of tools. In addition, the fasteners may become lost during shipping or when not in use.

One embodiment of a coupler for a media storage system having at least a first storage library and a second storage library may comprise a receiving member. The receiving member may have an opening formed in the first storage library and an opening formed in the second storage library. The openings of the receiving member align with one another when the first storage library is positioned adjacent the second storage library. The coupler may also comprise an arm member pivotally mounted to the first storage library. The arm member pivots between an open position and a closed position and engages the receiving member when the arm member is pivoted to the closed position, thereby connecting the first storage library to the second storage library.

A method for connecting a first storage library to a second storage library may comprise positioning the first storage library adjacent the second storage library, pivoting an arm member provided on the first storage library toward a closed position, and receiving the arm member in an opening formed on the second storage library when the arm member is pi voted to the closed position to connect the first storage library to the second storage library.

Illustrative and presently preferred embodiments of the invention are illustrated in the drawings, in which:
FIG. 1 is a perspective view of one embodiment of a media storage system having two storage libraries;
FIG. 2 is a simplified bottom plan view of one of the storage libraries shown in FIG . 1 with the bottom panel removed;
FIG. 3 is a simplified top plan view of another of the storage libraries shown in FIG. 1 with the top panel removed;
FIG. 4 is a simplified side view of the two storage libraries of FIG. 1 illustrating the operation of a coupler according to one embodiment of the invention,
wherein the coupler is shown in (a) an open position, and (b) a closed position;
FIG. 5 is a top plan view of one embodiment of a coupler for connecting storage libraries to one another;
FIG. 6 is a side view of the coupler shown in FIG. 5 in (a) an open position and (b) a closed position;
FIG. 7 is a side view of another embodiment of a coupler shown in (a) an open position and (b) a closed position; and
FIG. 8 is yet another embodiment of a coupler.

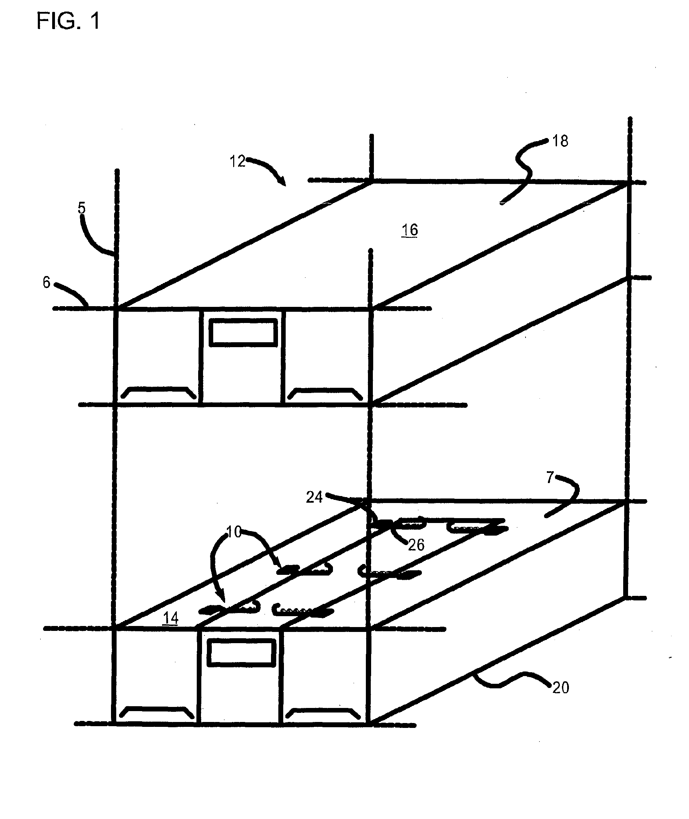

Storage libraries 14, 16 (FIG. 1) may be added to media storage systems 12 to provide storage capacity for additional data cartridges (not shown) and/or to provide additional read/write devices (not shown). The storage libraries 14, 16 may be arranged adjacent one another. Storage libraries are commonly stacked one on top of the other as shown in FIG. 1. Of course additional storage libraries may also be stacked on top of one another as indicated by lines 5 in FIG. 1. In addition, other arrangements are also possible. For example, the storage libraries may be stacked adjacent one another as indicated by lines 6 in FIG. 1. In any event, it may be desirable to connect storage libraries 14, 16 to one another so that they do not shift during operation.

An embodiment of the media storage system 12 is shown in FIG. 1 with which coupler 10 of the present invention may be used according to the teachings of the invention. The media storage system 12 may comprise storage libraries 14, 16. Storage libraries 14, 16 may each have a number of storage slots or storage magazines (not shown) for storing data cartridges. Coupler 10 of the present invention may be used to connect storage libraries 14, 16 to one another, as will be explained in more detail below.

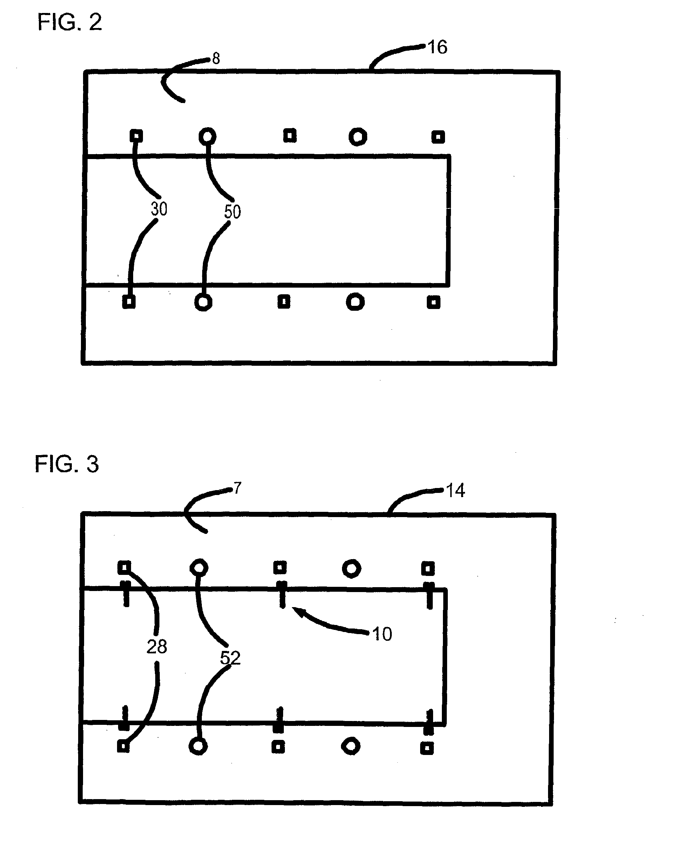

Optionally, one or more guides 50, 52 (FIG. 2 and FIG. 3) may be provided on each of the storage libraries 14, 16. Guides 50, 52 serve to align the storage libraries 14, 16 with one another when the storage libraries 14, 16 are stacked one on top of the other. In one embodiment, guides 50, 52 may be mating guides (e.g., a cylinder and a cylindrical opening, respectively). However, any suitable guides 50, 52 may be provided according to the teachings of the invention. In yet other embodiments where the storage libraries 14, 16 are readily aligned with one another without the use of guides, guides 50, 52 may not be provided at all.

Although the media storage system 12 is shown with storage libraries 14, 16 arranged in a particular configuration in FIG. 1, other suitable configurations are also contemplated as being within the scope of the invention. For example, storage libraries 14, 16 may be positioned side by side next to one another as shown by lines 6 in FIG. 1. In addition the number of storage libraries 14, 16 that are used may depend upon various design considerations, as indicated by lines 5 in FIG. 1. Such considerations may include, but are not limited to the physical space available and the desired dimensions of the media storage system 12.

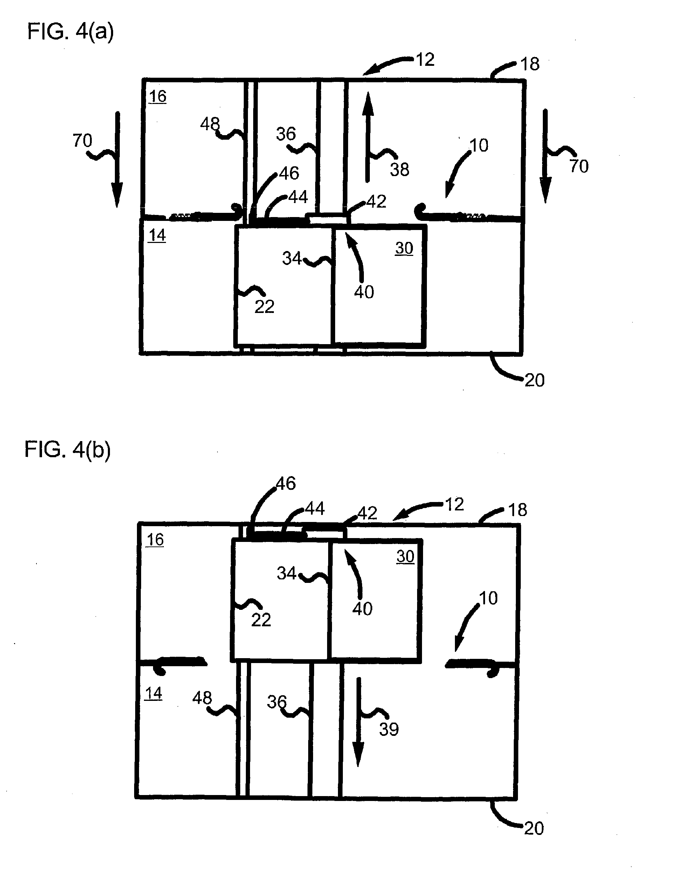

Each of the storage libraries 14, 16 may comprise removable panels (e.g., a top panel 18 and a bottom panel 20). The panels 18, 20 may be removed from one or more of the storage libraries 14, 16 to provide a path for cartridge-handling system 30 to pass therebetween. One of the storage libraries 16 is shown in more detail in FIG. 2 with the bottom panel 20 removed, and another of the storage libraries 14 is shown in FIG. 3 with the top panel 18 removed. Accordingly, the storage libraries 14, 16 can be stacked on top of one another and a cartridge-handling system 30 (FIG. 4(a) and FIG. 4(b)) can be moved between the storage libraries 14, 16 to access the data cartridges. As more storage capacity is required, more storage libraries may also be added to the media storage system 12.

An embodiment of the cartridge-handling system 30 is shown in FIG. 4(a) and FIG. 4(b) as it may be used with the media storage system 12. Briefly, the cartridge-handling system 30 may comprise a carriage or translate frame 22 mounted in the media storage system 12 so that it can be raised (e.g., in the direction of arrow 38) and lowered (e.g., in the direction of arrow 39). A cartridge-engaging assembly 34 may be mounted in translate frame 22 so that it moves up and down with translate frame 22. Cartridge-engaging assembly 34 may also be laterally moved within translate frame 22. The cartridge-engaging assembly 34 is adapted to access (i.e., retrieve, eject, and transport) data cartridges in the media storage system 12.

Translate frame 22 may be mounted in the media storage system 12 according to one embodiment of the invention as follows. At least one vertical guide 36 may be mounted in storage libraries 14, 16 so that it defines a vertical displacement path (e.g., in the directions illustrated by arrows 38 and 39). The translate frame 22 slidably engages vertical guide(s) 36 when the cartridge-handling system 30 is mounted in the media storage system 12. Accordingly, cartridge-handling system 30 may be operated to travel along the vertical displacement path defined by vertical guide(s) 36 between the storage libraries 14, 16.

A lift system 40 may be provided for the cartridge-handling system 30 and may be operated to move the translate frame 22 through the vertical displacement path 38, 39. In one embodiment, lift system 40 may comprise a drive motor 42 mounted to the translate frame 22. Drive motor 42 may be linked by one or more drive shafts 44 to a gear assembly 46, which in turn engages a guide track 48 mounted to the media storage system 12. In one embodiment, gear assembly 46 may engage gear teeth in guide track 48. Accordingly, when drive motor 42 is operated, it causes the translate frame 22 to travel along vertical displacement path 38, 39 in the media storage system 12.

It is understood that other embodiments for mounting cartridge-handling system 30 in the media storage system 12 for translation therein are also contemplated as being within the scope of the invention. Other suitable guide systems and drive systems are readily available and it would be well-understood by one skilled in the art, after having become familiar with the teachings of the invention, to provide one or more such guide systems and/or drive systems for use with cartridge-handling system 30.

The foregoing description of the media storage system 12 is provided in order to better understand one environment in which an embodiment of coupler 10 of the present invention may be used. It should be understood that embodiments of coupler 10 of the present invention may also be used in conjunction with any of a wide range of other types and configurations of media storage systems, now known or that may be developed in the future.

As an illustration, the media storage system 12 just described is commonly used with magnetic storage media (i.e., data cartridges). However, the media storage system 12 is not limited to use with any particular type or style of storage media.

In addition, it is noted that the media storage system 12 may also house various ancillary devices, such as power supplies, electronic controls, and data processing systems. Such ancillary devices are commonly associated with media storage systems, and therefore are not shown or described herein as they are well-understood and further description is not needed for a full understanding of, or to practice the invention.

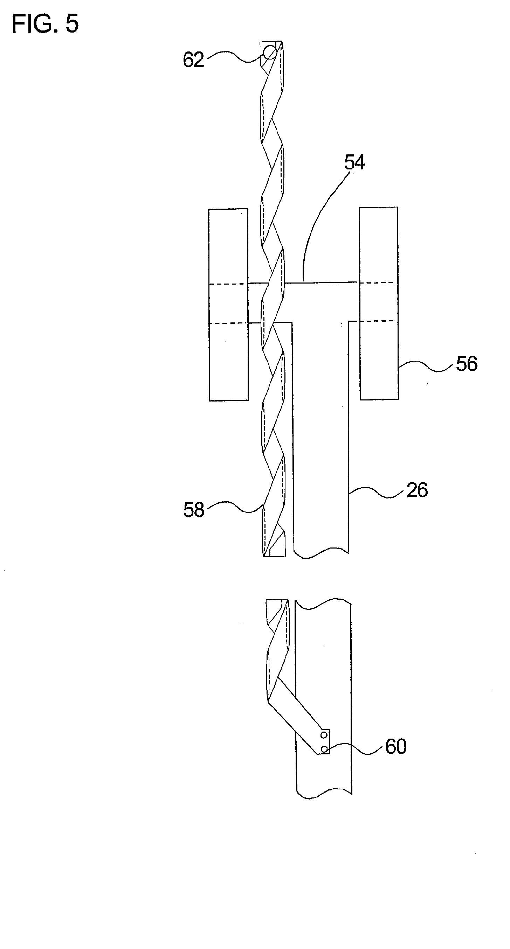

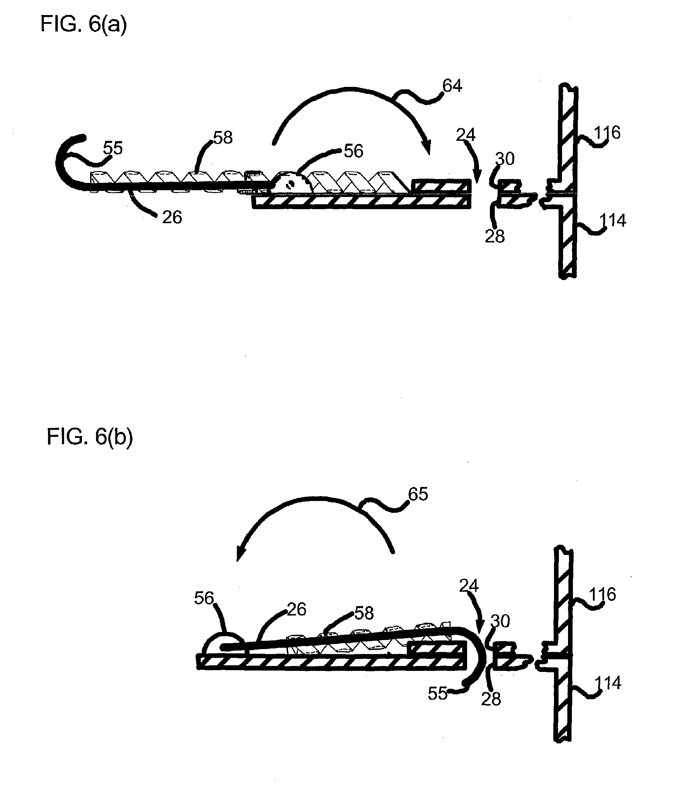

One embodiment of the coupler 10 for use with the media storage system 12 is shown in more detail in FIG. 5. Coupler 10 may comprise an arm member 26 having a base portion 54. Arm member 26 may be pivotally mounted at base portion 54 with a mounting assembly 56 secured to the edge 7 (FIG. 3) of the first storage library 14. Accordingly, arm member 26 may be pivoted in the direction of arrows 64 and 65 between an open position shown in FIG. 6(a) and a closed position shown in FIG. 6(b).

According to the embodiment of coupler 10 shown in FIG. 5, base portion 54 of the arm member 26 is cylindrical and is received within a circular opening (FIG. 6(a) and FIG. 6(b)) formed in the mounting assembly 56. However, other embodiments for mounting the arm member 26 to the storage library 14 are also contemplated as being within the scope of the invention. For example, arm member 26 may be mounted to the storage library 14 using a hinge assembly (not shown). In addition, coupler 10 may be mounted to the storage libraries 14, 16 in any suitable manner. For example, arm member 26 may be mounted to the side of the first storage library 14 and engage a receiving member 24 provided on the side of the second storage library 16.

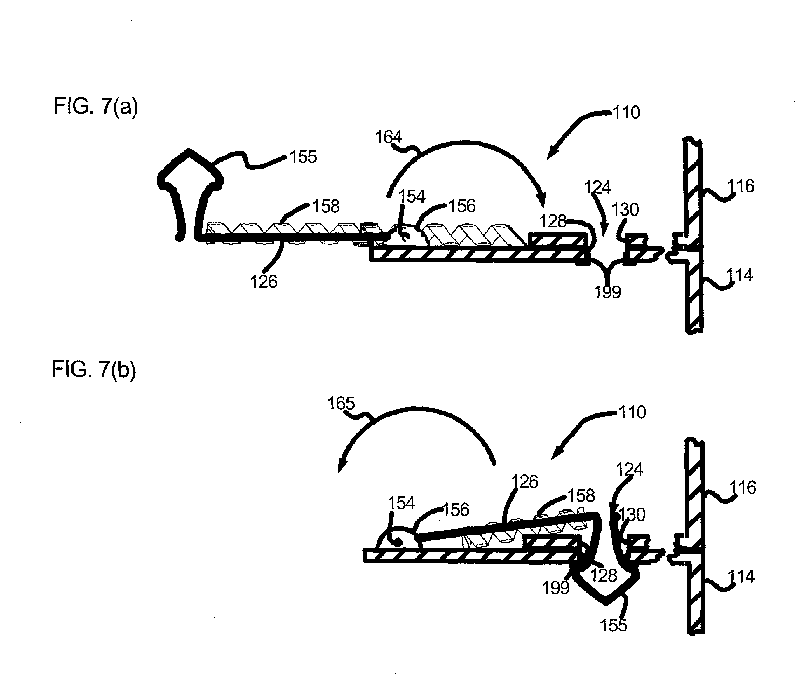

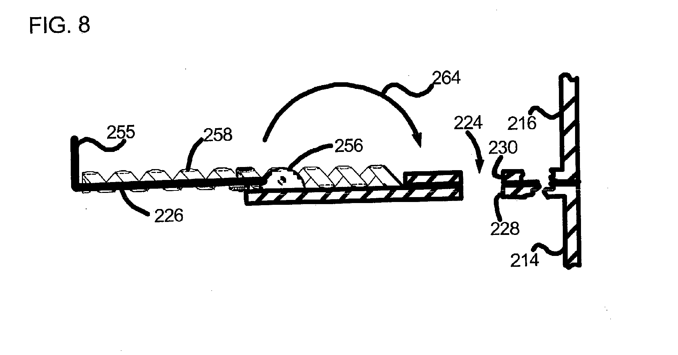

Arm member 26 may also have a head portion 55. In this embodiment, head portion 55 is generally U-shaped (e.g., a hook) so that it engages receiving member 24 when arm member 26 is in the closed position. However, other embodiments are also contemplated as being within the scope of the invention. An example is shown in FIG. 7(a) and FIG. 7(b), wherein head portion 155 is substantially spade-shaped. Another example is shown in FIG. 8, wherein the head portion 255 is substantially L-shaped. In other embodiments, the head portion may be altogether omitted and the arm member 24 may instead overlap the edge portion 8 of the adjacent storage library 16.

Coupler 10 also comprises a receiving member 24 that receives head portion 55 of the arm member 26 when it is pivoted to the closed position. In one embodiment, receiving member 24 may comprise openings 28, 30 formed through the edges 7, 8 of the storage libraries 14, 16 (see also FIG. 2 and FIG. 3). When the storage libraries 14, 16 are stacked one on top of the other, openings 28, 30 are substantially aligned with one another and provide an opening in which the arm member 26 can be received, as illustrated in FIG. 6(a) and FIG. 6(b).

Coupler 10 may also comprise a resilient member 58, such as the spring shown in FIG. 5. Resilient member 58 may be mounted to arm member 26 on one end (e.g., with one or more suitable fasteners 60) and to the storage library 14 on the opposite end (e.g., with one or more suitable fasteners 62).

According to such an embodiment, resilient member 58 functions to bias arm member 26 toward the closed position. That is, resilient member 58 is extended when the arm member 26 is in the fully-open position as shown in FIG. 6(a). When arm member 26 is moved in the direction of arrow 64, the force exerted by resilient member 58 on the arm member 26 pulls it in the direction of arrow 64, causing arm member 26 to move into the closed position shown in FIG. 6(b).

Of course any suitable resilient member 58 may be used according to the teachings of the invention. For example, resilient member 58 may be a rubber cord. Likewise, resilient member 58 may be mounted in any suitable configuration. For example, resilient member 58 may be mounted on one end to the mounting assembly 56. In addition, any suitable fasteners may be used to mount the resilient member 56 (e.g., screws, clips, pins, hooks, adhesive, weld).

Before describing the operation of coupler 10, it should be'noted that coupler 10 may be fabricated from any of a wide range of materials suitable for the intended application. By way of example, arm member 26 may be fabricated from metal or hard plastic. However, the present invention should not be regarded as limited to being fabricated from any particular material(s).

In addition, while embodiments of coupler 10 have been shown and described herein according to particular embodiments, and as it may be used with embodiments of a particular media storage system 12, other embodiments of the invention are also contemplated as being within the scope of the invention.

Coupler 10 may be operated to connect the storage libraries 14, 16 according to one embodiment of the invention as follows. With reference to FIG. 4(a), the first storage library 14 may be positioned adjacent the second storage library 16. For example, the first storage library 14 may be positioned on top of the second storage library 16 in the direction illustrated by arrows 70. Once the storage libraries 14, 16 are positioned adjacent one another, the arm member 26 of each of the couplers 10 (i.e., one or more) may be pivoted through the air space or opening provided between the adjacent storage libraries 14, 16, and into the closed position.

According to one embodiment, arm member 26 may be pivoted toward the closed position by cartridge-handling system 30. That is, as cartridge-handling system 30 is vertically moved between the storage libraries 14, 16, translate frame 22 contacts arm member 26 and moves it in an upward direction.

Vertical movement of cartridge-handling system 30 is the result of lift system 40. Lift system 40 may be operated to raise or lower translate frame 22. More specifically, drive motor 42 may be operated to rotate gear assembly 46 operatively associated therewith. The gear assembly 46 engages lift track 48 and the cooperative action thereof moves translate frame 22 through the vertical displacement path in the direction of arrows 38, 39 defined by vertical guides 36. Depending on the direction of rotation of drive motor 42 (e.g., clockwise or counter-clockwise), the translate frame 22 is either raised or lowered.

It is understood that arm member 26 of the coupler 10 may be pivoted in any suitable manner. For example, in another embodiment arm member 26 may be manually pivoted. In yet another embodiment a separate actuator (e.g., a solenoid) may be provided to pivot the arm member 26. Of course where a resilient member 58 is provided, resilient member 58 also functions to pivot the arm member 26.

Arm member 26 is pivoted toward (e.g., in the direction of arrow 64) and received by receiving member 24. In an embodiment where arm member 26 comprises a head portion 55, it may engage receiving member 24. For example, head portion 55 may hook around the opening(s) 28, 30 formed through the edge portion of the adjacent storage libraries 14, 16. In any event, when the arm member 26 is pivoted to the closed position it connects the first storage library 14 to the second storage library 16.

An alternative embodiment of the coupler 110 is shown in FIG. 7(a) and FIG. 7(b) as it may be used to connect storage libraries 114, 116. Coupler 110 may comprise an arm member 126 having a base portion 154. Arm member 126 may be pivotally mounted at the base portion 154 to the first storage library 114 by a mounting assembly 156, similar to that described above for the coupler 10. Arm member 126 may be pivoted in the direction of arrow 164 and 165 between an open position shown in FIG. 7(a) and a closed position shown in FIG. 7(b).

Arm member 126 may also have a head portion 155. Head portion 155 may be generally spade-shaped, such as a cabinet latch, so that it engages the receiving member 124 when the arm member 126 is in the closed position. That is, head portion 155 may fit within the openings 128 and 130 formed through the storage libraries 114, 116. The coupler 110 may also comprise a resilient member 158, similar to that described above for the coupler 10.

According to one embodiment, the openings 128 and 130 deform or expand to allow head portion 155 to pass therethrough. However, other embodiments are also contemplated as being within the scope of the invention. For example, the openings 128, 130 may comprise linings fabricated of a deformable material (e.g., soft plastic, rubber, or foam) that expands to allow the head portion 155 to pass therethrough. Alternatively, latch members (e.g., such as provided on kitchen cabinets) may be provided to receive the head portion 155. In yet other embodiments, the head portion 155 may deform so that it can pass through the openings 128, 130.

It is noted that coupler 110 may be operated similarly to the coupler 10 described above. Furthermore, it is understood that yet other embodiments of the coupler are also contemplated as being within the scope of the invention and the embodiment of the coupler 110 is provided only as one example of another embodiment. Another example of a coupler 210 is shown in FIG. 8 wherein head portion 255 is substantially L-shaped. It is noted that like components of the coupler 10 are referenced using two-hundred series reference numbers (e.g., 210). Still other embodiments are also contemplated as being within the scope of the present invention.

A monitor 199 may also be provided for use with the coupler 110 according to the teachings of the invention. The monitor 199 may be operatively associated with the coupler 110 to indicate the position of the arm member 126. According to one embodiment, the monitor 199 may comprise a basic electrical circuit. In such an embodiment, contacts may be provided across openings 128 so that the circuit is open when arm member 126 is in the open position, and the circuit is closed when arm member 126 is in the closed position. Suitable circuitry may also be linked to the contacts to provide an electrical current to the contacts and to provide the user with a signal indicating the state of coupler 110 (i.e., whether the arm member 126 is in the open or closed position).

It is understood that other embodiments of the monitor 199 are also contemplated as being within the scope of the invention. By way of example, monitor 199 may comprise a light signal and photo detector. Yet other embodiments of the monitor 199 will also become apparent to one skilled in the art after having become familiar with the teachings of the present invention. Of course it is also understood that the monitor 199 may also be provided for use with the coupler 10 described above.

It is readily apparent that the coupler 10 can be used to removably connect the storage libraries 14, 16 together so that they do not shift during operation . The coupler 10 does not require the use of screws or similar fasteners. Accordingly, the storage libraries 14, 16 can be connected faster and without the use of tools. In addition, unlike screws or similar fasteners, the coupler 10 is mounted to the storage library 14 and therefore is not likely to be lost during shipping or when not in use. Nor is coupler 10 prone to being stripped during assembly.

## Claims

1. A coupler (10) for a media storage system (12) having at least a first storage library (14) and a second storage library (16), comprising:
a receiving member (24) having an opening (28) formed in said first storage library and an opening (30) formed in said second storage library, the openings of said receiving member aligning with one another when the first storage library is positioned adjacent the second storage library; and
an arm member (26) pivotally mounted to the first storage library, said arm member pivoting between an open position and a closed position, said arm member engaging said receiving member when said arm member is pivoted to the closed position, thereby connecting the first storage library to the second storage library.

2. The coupler (10) of claim 1, further comprising a resilient member (58) having a first end and a second end, said resilient member attached at the first end to the first storage library (14), said resilient member attached at the second end to said arm member (26).

3. The coupler of claim 2, wherein said resilient member (58) biases said arm member (26) toward the closed position.

4. The coupler of any preceding claim, further comprising a mounting assembly (56) on said first storage library (14), wherewith said arm member (26) is pivotally mounted to said mounting assembly.

5. The coupler (10) of any preceding claim, further comprising:
a guide (52) on said first storage library (14);
a guide (50) on said second storage library (16), said guides aiding to align the openings (28, 30) of said receiving member (24).

6. The coupler (10) of any preceding claim, further comprising a monitor (199) operatively associated with said arm member (26), said monitor indicating the position of said arm member.

7. The coupler (10) of any preceding claim, wherein said arm member (26) is pivotable into the open position to disconnect the first storage library (14) from the second storage library (16).

8. The coupler (10) of any preceding claim, wherein said arm member (26) has a head portion (55), the head portion of said arm member received in said receiving member (24) when said arm member is in the closed position.

9. A method for connecting a first storage library (14) to a second storage library (16), comprising:
positioning the first storage library adjacent the second storage library;
pivoting an arm member (26) provided on the first storage library toward a closed position; and
receiving the arm member in an opening (30) formed on the second storage library when the arm member is pivoted to the closed position to connect the first storage library to the second storage library.

10. The method of claim 9, further comprising moving a translate frame (22) between the first and second storage libraries (14, 16), wherein moving the translate frame pivots the arm member (26).
